# EUROPEAN PATENT SPECIFICATION

(11) **EP 2 438 681 B1**
(45) Date of publication and mention of the grant of the patent: **17.04.2013**
(21) Application number: 10729969.5
(22) Date of filing: 02.06.2010
(51) Int. Cl.: H04B 1/00

(54) **SYSTEMS AND METHODS FOR MAINTAINING A CONTROLLED POWER OUTPUT AT AN ANTENNA PORT OVER A RANGE OF FREQUENCIES DEFINED BY TWO OR MORE FREQUENCY BANDS**
SYSTEM UND VERFAHREN ZUM ERZIELEN EINER KONTROLIERTEN LEISTUNGSABGABE AN EINEM ANTENNENPORT ÜBER EINEN BEREICH VON FREQUENZEN INNERHALB ZWEIER ODER MEHRERER FREQUENZBÄNDER
SYSTÈMES ET PROCÉDÉS POUR CONSERVER UNE PUISSANCE DE SORTIE RÉGULÉE SUR UN PORT D'ANTENNE DANS UNE PLAGE DE FRÉQUENCES DÉLIMITÉE PAR UN MINIMUM DE DEUX BANDES DE FRÉQUENCES

(30) Priority: 03.06.2009 US 477602
(43) Date of publication of application: 11.04.2012
(73) Proprietor: Harris Corporation, Melbourne, FL 32919 (US)
(72) Inventor: BEGHINI, Kenneth, Spencerport New York 14559 (US); VAN NESS, Eric, Macedon New York 14502 (US); MARTZ, Donald, Webster New York 14580 (US)
(74) Representative: Schmidt, Steffen J.
(86) International application number: PCT/US2010/037031
(87) International publication number: WO 2010/141556

(56) References cited:
- EP-A1- 1 696 579
- EP-A1- 1 876 721
- WO-A2-99/60710
- US-A- 5 973 568
- US-A1- 2001 027 119

## Description

The invention concerns multiband transceivers. More particularly, the invention concerns systems and methods for maintaining a controlled power output at the antenna port over a range of frequencies defined by two or more frequency bands.

There are many conventional communication systems known in the art that implement multiband transceivers. One such conventional communication system is disclosed in Japanese Laid-Open No. 2003-8470. This communication system comprises a multi-band transceiver. The multi-band transceiver includes at least two (2) parallel transceiver circuits coupled to an antenna element via a branch circuit (e.g., a diplexer). Each of the transceiver circuits includes a transmit circuit coupled to a receive circuit via a switch. The switch selectively couples the antenna element to the transmit and receive circuits. Each transmit circuit is configured to operate at a different frequency (e.g., a low frequency, an intermediate frequency or a high frequency). Each transmit circuit includes a power amplifier and a coupler. The power amplifier is configured to change the amplitude of a signal to be transmitted from the antenna element. As such, the power amplifier includes a power amplification circuit and a matching circuit. The coupler is configured to distinguish between a signal input at its input terminal and a signal input at its output terminal. This characteristic of the coupler is of particular use in the transmit circuit in which both the input signal and a signal which is reflected from a mismatched antenna element can be independently monitored. At least one of the input and reflected signals is utilized to control the output power of the transmit circuit. At the time of transmission, a signal is amplified by the power amplifier of a respective transmit circuit and transmitted as a high or a low frequency signal from the antenna element via the coupler, switch, and branch circuit.

Despite the advantages of the conventional communication system disclosed in Japanese Laid-Open No. 2003-8470, it suffers from certain drawbacks. For example, the coupler resides before the switch and branch circuit (e.g., a diplexer). As such, the coupler regulates signal power prior to the insertion losses resulting from the inclusion of the switch and/or branch circuit (e.g., a diplexer) in the transmit path. Consequently, there are signal power variations as a function of frequency at the antenna due to the switch and/or branch circuit (e.g., a diplexer). Further, the conventional communication system requires a coupler and switch for each transceiver circuit. As such, implementation of the communication system is relatively expensive and hardware intensive. Also, the transceiver circuits take up a relatively large amount of valuable space on printed circuit boards. Further, the communication system operates over a relatively small number of frequency ranges. More particularly, a first transceiver of the communication system operates over a Digital Cellular System frequency band (1800 MHz bands) and a second transceiver of the communication system operates over a Global System For Mobile communications (GSM) frequency band (900 MHz bands).

Another conventional communication system is described in U.S. Patent Publication No. 2005/0003855 to Wada et al. (hereinafter referred to as "Wada"). The communication system of Wada includes an antenna element and a multiband transceiver. The multiband transceiver is configured to transmit signals of multiple frequency bands and receive signals of multiple frequency bands. The multiband transceiver includes a plurality of parallel transceiver circuits. Each transceiver circuit operates at a different frequency band (e.g., low frequency band, an intermediary frequency band and a high frequency band). Each transceiver circuit includes a transmit circuit and a receive circuit coupled to the antenna element via a triplexer. Each transmit circuit includes a power amplifier, a capacitor and a filter. The triplexer is configured to select one of many input signals and outputs the selected input signal to the antenna element for transmission therefrom.

Despite the advantages of the conventional communication system disclosed in Wada, it suffers from certain drawbacks. For example, signal power variations undesirably occur at the antenna as a function of frequency due to the triplexer. Also, the communication system of Wada operates over a relatively small number of frequency ranges that are separated by 1000 MHz.

EP 1 696 579 A1 discloses a Multi-Band High Frequency (MBHF) circuit for performing wireless communication among a plurality of communication systems having different communication frequencies. In one embodiment, the MBHF circuit comprises Transmit Sub-Circuits (TSCs). The MBHF circuit also comprises a diplexer, a Directional Coupler (DC) and an antenna. Each TSC is configured to support communications in a respective frequency band (e.g., a 2.4 GHz band or a 5 GHz band). The diplexer has two input terminals. A first input terminal is coupled to the first TSC. A second input terminal is coupled to the second TSC. Accordingly, the diplexer receives signals from the TSCs. The diplexer routes received signals to a common output port. The output port is coupled to an input port of DC. The DC comprises the following output ports: A first output port, which is coupled to the antenna via a switch; a second output port, which is coupled to a feedback loop. The feedback loop provides a means for controlling an output power from amplifiers of the TSCs.

US 5,973,568 discloses a circuit for performing wireless communication among two communication systems having different communication frequencies. Two Transmit Sub-Circuits (TSCs) are provided. The circuit also comprises a diplexer, a Directional Coupler (DC) and an antenna. Downstream of the DC, a lowpass filter and a T/R switch are provided before the antenna.

US 2001/0027119 A1 discloses a high frequency composite unit for performing wireless communication among two communication systems having different communication frequencies. Two Transmit Sub-Circuits (TSCs) are provided. The circuit also comprises a diplexer, a Directional Coupler (DC) and an antenna.

EP 1 876 721 A1 discloses a multi-band high frequency circuit.

In view of the forgoing, there is a need in the art for an improved system and method for Radio Frequency (RF) combining and control using an RF multiplexer. This system needs to provide a constant signal power at the antenna. This system also needs to operate over a relatively large number of frequency ranges.

The present invention is defined in claim 1. Embodiments of the present invention concern multiband transceivers. Each of the multiband transceivers includes transmit sub-circuits, a multiplexer and a directional coupler. The transmit sub-circuits are arranged in parallel. Each of the transmit sub-circuits is configured to support communications in a respective frequency band. The respective frequency band includes at least one of the following frequency bands a 30-50 MHz Very High Frequency Low band, a 136-174 MHz VHF High band, a 380-520 MHz Ultra High Frequency band, and a 762-870 MHz band.

The multiplexer is electrically arranged for receiving RF signals from each of the transmit sub-circuits at input ports thereof. The multiplexer is configured to route signals from each of the input ports to a common output port thereof. The multiplexer is also configured to reduce harmonic distortion induced by the transmit sub-circuits.

The directional coupler has an input port, a transmitted port and a coupled port. The input port is electrically connected to the common output port of the multiplexer. The transmitted port is connected to an antenna port. The coupled port is configured for coupling a portion of the RF signal to a common feedback loop for the transmit sub-circuits. The common feedback loop provides a feedback signal coupled to each transmit sub-circuit.

The directional coupler includes a pair of transformers coupled together via wires and a printed wiring board having plated wells. Each transformer includes a primary winding, a secondary winding and a toroidal core. Each transformer is disposed in a respective well of the plated wells so that the primary and/or secondary windings reside within the respective well. The primary and secondary windings are wound around the toroidal core. The primary winding is formed of a coaxial cable having a desired impedance. The secondary winding is formed of a subminiature lead wire.

Each transmit sub-circuit is responsive to the feedback signal for maintaining a controlled power output at the antenna port over a range of frequencies defined by the frequency bands. In this regard, it should be understood that each transmit sub-circuit includes at least one of a power amplifier for increasing an amplitude of the RF signal and a low pass filter for filtering the RF signal. The power amplifier is responsive to the feedback signal for adjusting an amplitude of the RF signal so as to counteract an insertion loss resulting from the multiplexer.

Embodiments of the present invention also concern methods for maintaining a controlled power output at the antenna port over a range of frequencies defined by two or more frequency bands. The methods involve selectively propagating an RF signal along any one of a plurality of parallel transmit paths of a multimode transceiver. The methods also involve routing the RF signal from one of a plurality of multiplexer input ports to a common multiplexer output port. The methods further involve reducing harmonic distortion in the RF signal. A feedback signal is generated by coupled a portion of the RF signals from the common multiplexer output port to a common feedback loop for the transmit sub-circuits. The feedback signal is provided to at least one of the transmit sub-circuits. At the transmit sub-circuit, the feedback signal is used to maintain a controlled power output of the RF signal at an antenna port over a range of frequencies.

Embodiments will be described with reference to the following drawing figures, in which like numerals represent like items throughout the figures, and in which:
FIG. 1 is a front perspective view of a communication device that is useful for understanding the present invention.
FIG. 2 is a schematic illustration of a transmitter of the communication device shown in FIG. 1.
FIG. 3 is a schematic illustration of an exemplary passive circuit forming a triplexer that is useful for understanding the present invention.
FIG. 4 is a graph showing a plot of a frequency response of a triplexer shown in FIG. 3 that is useful for understanding the present invention.
FIG. 5 is schematic illustration of an exemplary directional coupler that is useful for understanding the present invention.
FIG. 6 is a schematic illustration of an equivalent circuit for the directional coupler of FIG. 5 that is useful for understanding the present invention.
FIG. 7 is a top view of a transformer that is useful for understanding the present invention.
FIG. 8 is a side view of the transformer of FIG. 7 that is useful for understanding the present invention.
FIG. 9 is a flow diagram of a method for maintaining a controlled power output at the antenna port over a range of frequencies defined by two or more frequency bands.

The present invention is described with reference to the attached figures, wherein like reference numbers are used throughout the figures to designate similar or equivalent elements. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operation are not shown in detail to avoid obscuring the invention. The present invention is not limited by the illustrated ordering of acts or events, as some acts may occur in different orders and/or concurrently with other acts or events. Furthermore, not all illustrated acts or events are required to implement a methodology in accordance with the present invention.

Embodiments of the present invention generally involve multiband transceivers and methods for maintaining a controlled power output at the antenna port over a range of frequencies defined by two or more frequency bands. The RF multiplexer provides harmonic filtering of RF signals. The multiband transceiver embodiments are configured so as to overcome certain drawbacks of conventional communication systems including multiband transceivers (such as those described above in relation to the section entitle "Description of the Related Art"). For example, RF multiplexers of the multiband transceiver embodiments are contained in power regulation loops. As such, signal power is regulated after the frequency variable insertion loss resulting from the inclusion of the multiplexers in the transmit paths. Consequently, the power at the input port of the antenna element can be controlled so that it is substantially constant throughout each frequency band and between multiple frequency bands as needed (e.g., 5.0 Watts). Also, one coupler is employed for monitoring and regulating communications in multiple frequency bands. In effect, the system embodiments are less expensive and hardware intensive as compared to conventional multiband transceiver systems. Further, the multiband transceiver embodiments support communications in a larger number of frequency ranges than conventional transceivers.

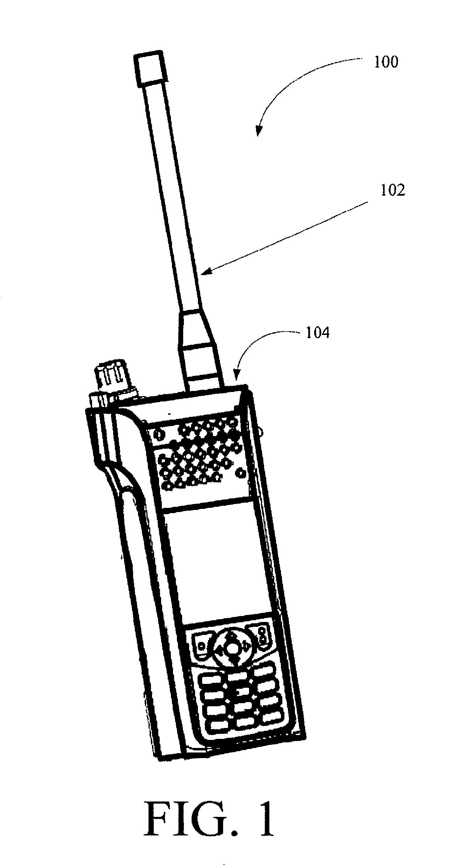

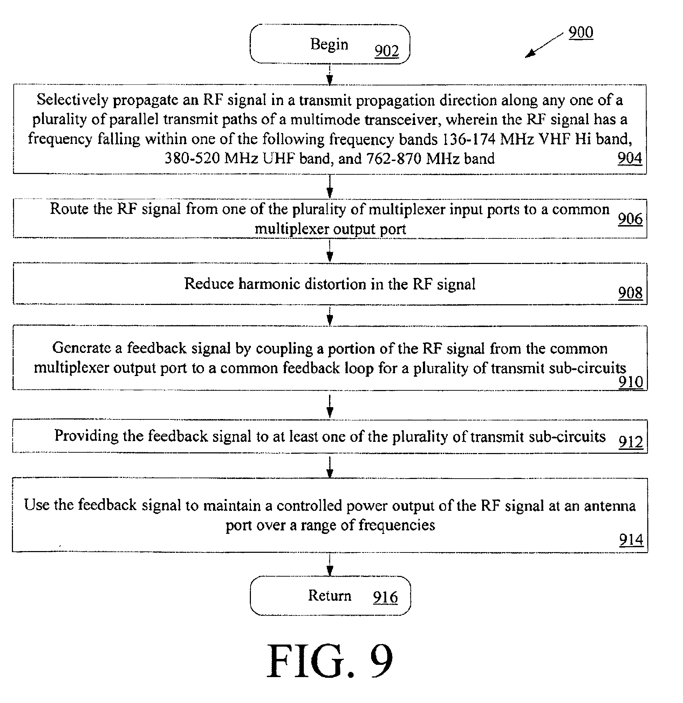

The systems embodiments of the present invention will be described in detail below in relation to FIGS. 1-8. The method embodiments of the present invention will be described below in relation to FIGS. 9. The method embodiments of the present invention can be used in a variety of applications. For example, the method embodiments can be used in radio applications, car phone applications, cordless phone applications, computer applications and other wireless communication applications.

### Exemplary Communication System Embodiment

Referring now to FIG. 1, there is provided a block diagram of an exemplary communication device 100 that is useful for understanding the present invention. The communication device 100 can include, but is not limited to, a radio (as shown in FIG. 1), a mobile phone, a cordless phone, a laptop computer, or other computing device with a wireless communication capability. The communication device 100 can generally use digital and/or analog technology. Thus, the following description should not be seen as limiting the system and methods disclosed herein to any particular type of wireless communication device.

According to the embodiment shown in FIG. 1, the communication device 100 comprises a handheld radio 104 having a monopole antenna element 102 mechanically coupled thereto for transmitting and receiving communication signals in various frequency bands. More particularly, the communication device 100 is a land mobile radio intended for use by terrestrial users in vehicles (mobiles not shown in FIG. 1) or on foot (portables as shown in FIG. 1). As such, the communication device 100 can be used by military organizations, emergency first responder organizations, public works organizations, companies with large vehicle fleets, and companies with numerous field staff.

According to one aspect of the invention, the communication device 100 is generally configured to communicate in an analog or digital mode with Project 25 (P25) radios. The phrase "Project 25 (P25)", as used herein, refers to a set of system standards produced by the Association of Public Safety Communications Officials International (APCO), the National Association of State Telecommunications Directors (NASTD), selected Federal Agencies and the National Communications System (NCS). The P25 set of system standards generally defines digital radio communication system architectures capable of serving the needs of Public Safety and Government organizations. The communication device 100 is also generally configured to communicate in analog mode with non-P25 radios.

The communication device 100 operates in a plurality of frequency bands. For example, the communication device 100 is configured to support analog Frequency Modulation (FM) communications and P25 modulation (digital C4FM) communications in the following bands: thirty to fifty Mega Hertz (30-50 MHz) Very High Frequency (VHF) LOw (LO) band; one hundred thirty-six to one hundred seventy-four Mega Hertz (136-174 MHz) VHF High (Hi) band; three hundred eighty to five hundred twenty Mega Hertz (380-520 MHz) Ultra High Frequency (UHF) band; and seven hundred sixty-two to eight hundred seventy Mega Hertz (762-870 MHz) band.

The communication device 100 may be used in a "talk around" mode without any intervening equipment between two (2) land mobile radio systems. The communication device 100 can also be used in a conventional mode where two (2) land mobile radio systems communicate through a repeater or base station without trunking. The communication device 100 can further be used in a trunked mode where traffic is automatically assigned to one or more voice channels by a repeater or base station. The communication device 100 can employ one or more encoders/decoders to encode/decode analog audio signals. The communication device 100 can also employ various types of encryption schemes from encrypting data contained in audio signals.

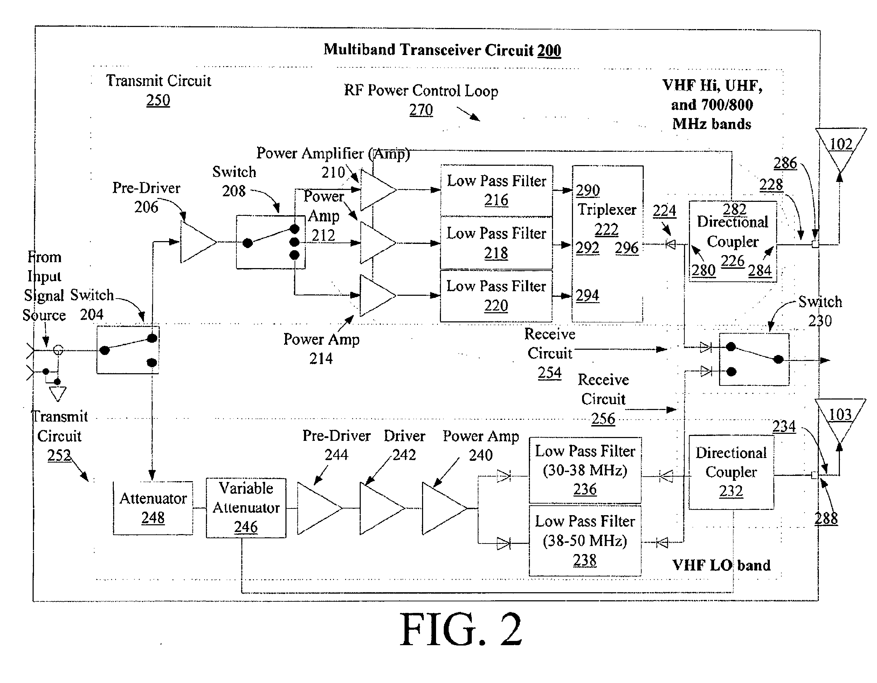

Referring now to FIG. 2, there is provided a schematic illustration of an exemplary multiband transceiver 200 implemented in the communication device 100 of FIG. 1. The multiband transceiver 200 requires that multiple transmitters be connected to the antenna element 102 with a regulated output power. As such, the multiband transceiver 200 includes two (2) parallel transmit circuits 250, 252 and two (2) parallel receive circuits 254, 256 connected to an antenna port 286. The parallel circuits 250, 253, 254, 256 provide a communication system that overcomes certain drawbacks of conventional communication systems. For example, conventional communication systems comprising separate transceivers for each frequency band is more hardware intensive and expensive to implement than the multiband transceiver 200 of the present invention.

Referring again to FIG. 2, a switch 204 is coupled to the two (2) parallel transmit circuits 250, 252 and a switch 230 is coupled to the two (2) parallel receive circuits 254, 256. The switch 204 selectively couples an input signal source (not shown) to the transmit circuits 250, 252. For example, if a transmit signal having a frequency in the VHF Hi band is to be transmitted from the antenna element 102, then the switch selectively couples the input signal source (not shown) to the transmit circuit 250. Similarly, if a transmit signal having a frequency in the UHF band is to be transmitted from the antenna element 102, then the switch selectively couples the input signal source (not shown) to the transmit circuit 250. Likewise, if a transmit signal having a frequency in the 700/800 MHz band is to be transmitted from the antenna element 102, then the switch selectively couples the input signal source (not shown) to the transmit circuit 250. If a transmit signal having a frequency in the VHF LO band is to be transmitted from the antenna element 103, then the switch selectively couples the input signal source (not shown) to the transmit circuit 252. It should be noted that the present invention is not limited to the switch 230 and transmit circuit 250, 252 configuration shown in FIG. 2. For example, the multiband transceiver 200 can be absent of the transmit circuit 252. In such a scenario, the multiband transceiver 200 is also absent of the switch 230.

Each transmit circuit 250, 252 is generally configured to generate RF electromagnetic energy and propagate RF electromagnetic signals with the aid of the antenna elements 102 and 103. Each receive circuit 254, 256 is generally configured to receive input signals from the antenna elements 102, 103 and forward these signals to subsequent processing devices (not shown). The subsequent processing devices (not shown) can include, but are not limited to, filters to separate a desired radio signal from all other signals picked up by the antenna elements 102 and 103, amplifiers to amplify the desired radio signal's amplitude, and a conversion device (e.g., demodulators and decoders) to convert the desired radio signal into a form (e.g., sound) usable for a user (not shown) of the communication device 100.

As shown in FIG. 2, the transmit circuit 250 is a multiband transmit circuit that supports analog and digital communications in the following bands: 136-174 MHz VHF Hi band; 380-520 MHz UHF band; and 762-870 MHz band. As such, the transmit circuit 250 requires that multiple transmit sub-circuits be connected to the antenna element 102 with a regulated output power. Each sub-circuit is included in an RF power control loop 270 configured to provide a substantially constant power over a wide range of frequencies at an input terminal of the antenna element. Each sub-circuit includes a plurality of power amplifiers 210, 212, 214 connected in parallel with each other and a plurality of low pass filters 216, 218, 220 connected in parallel with each other. The RF power control loop 270 also comprises a multiplexer 222, a diode 224 and a directional coupler 226. In the embodiment shown, the multiplexer 222 is in the configuration of a triplexer, meaning that it has three (3) inputs and a single output. However, the invention is not limited in this regard.

Notably, the inclusion of the triplexer 222 in the RF power control loop 270 allows for the elimination of additional impedance matching circuits and harmonic filters from the transceiver design. As such, the implementation of the transceiver 200 of FIG. 2 is less expensive than the implementation of conventional transceivers. Also, the transceiver 200 is less hardware intensive than conventional transceivers, and therefore takes up a smaller amount of valuable space on printed circuit boards than conventional transceivers. Further, the power at an input terminal of the antenna element 102 is more constant and accurate as compared to the power at antenna elements of conventional communication devices combined for multiband operation.

As shown in FIG. 2, a pre-driver 206 and switch 208 are coupled to the RF power control loop 270. The switch 208 selectively couples the pre-driver 206 to the power amplifiers 210, 212, 214. For example, if a transmit signal having a frequency in the 136-174 MHz VHF Hi band is to be transmitted from the antenna element 102, then the switch selectively couples the pre-driver 206 to the power amplifier 210. Similarly, if a transmit signal having a frequency in the UHF band is to be transmitted from the antenna element 102, then the switch selectively couples the pre-driver 206 to the power amplifier 212. Likewise, if a transmit signal having a frequency in the 700/800 MHz band is to be transmitted from the antenna element 102, then the switch selectively couples the pre-driver 206 to the power amplifier 214.

The pre-driver 206 and each power amplifier 210, 212, 214 provide a gain chain that increases the power of transmit signals from a low value to a high value. Each of the low pass filters 216, 218, 220 passes low-frequency signals and attenuates (reduces the amplitude of) signals with frequencies higher than a cutoff frequency. The cutoff frequency of each low pass filter 216, 218, 220 is selected in accordance with a particular transmit application.

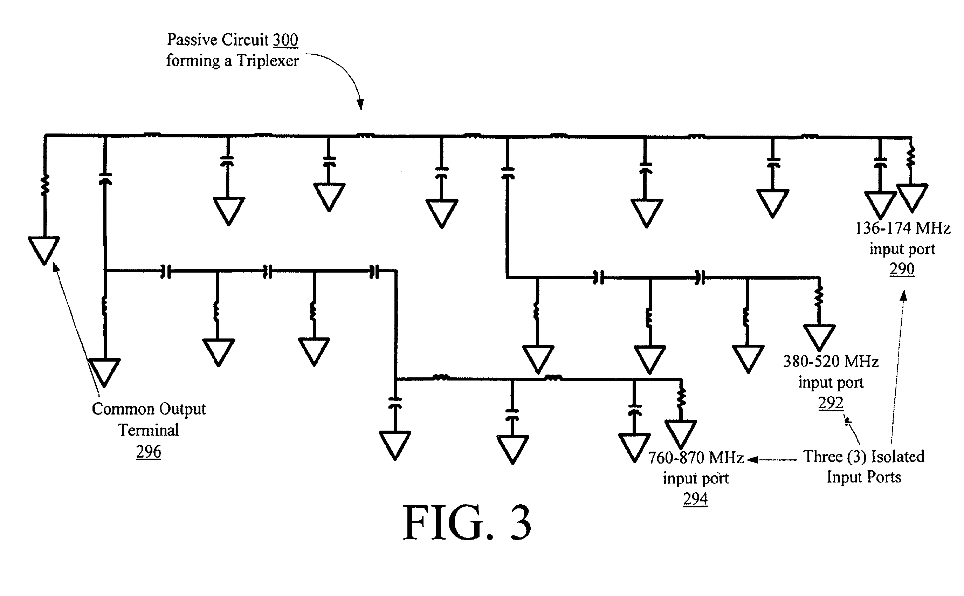

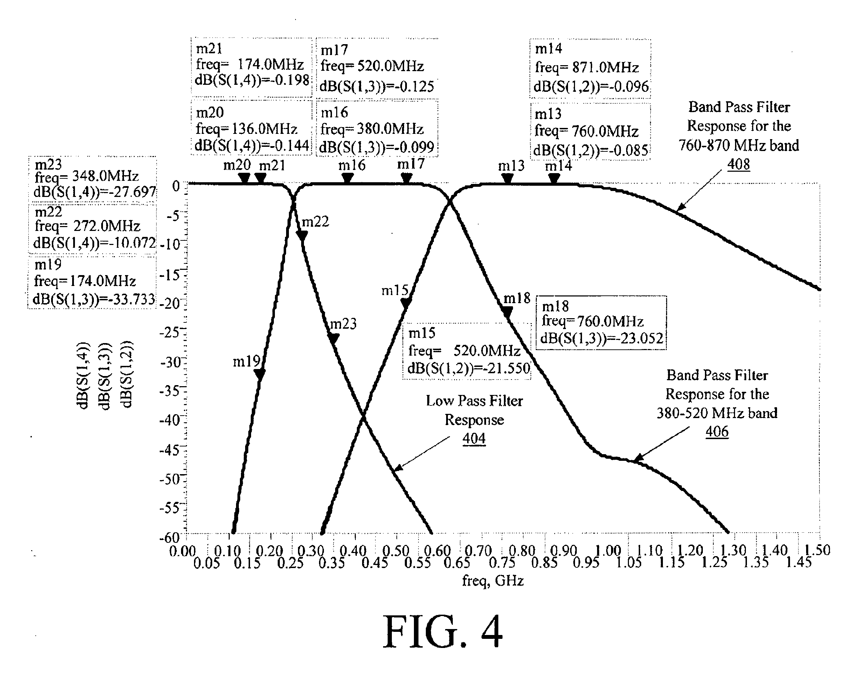

The triplexer 222 is generally composed of a passive circuit with three (3) input terminals 290, 292, 294 that are isolated from each other and combine to a common output terminal 296. A schematic illustration of such an exemplary passive circuit 300 forming the triplexer 222 is shown FIG. 3. As shown in FIG. 3, the passive circuit 300 includes a one hundred thirty six to one hundred seventy four Mega Hertz (136-174 MHz) input port (as shown by 290 of FIG. 3), a three hundred eighty to five hundred twenty Mega Hertz (380-520 MHz) input port and a seven hundred sixty to eight hundred seventy Mega Hertz (760-870 MHz) input port. A plot of the triplexer's frequency response is provided in FIG. 4. As shown in FIG. 4, a first trace 404 is provided which shows the low pass filter response of the passive circuit 300 for the 136-174 MHz band. The passband of the filter is illustrated by markers m20 and m21 of FIG. 4. The low pass filter response provides harmonic rejection at the 2nd and higher order harmonic frequencies. The harmonic rejection is illustrated by markers m22 and m23 of FIG. 4. The low pass filter prevents energy from being transferred to the 380-520 MHz input port and the 760-870 MHz input port. A second trace 406 is provided that shows the bandpass filter response of the passive circuit 300 for the 380-520 MHz band. The passband of the filter is illustrated by markers m16 and m17 of FIG. 4. The bandpass filter response provides harmonic rejection at the 2nd and higher order harmonic frequencies. The harmonic rejection is illustrated at marker m18 of FIG. 4. The highpass section of the bandpass filter prevents energy from being transferred back into the 136-174 MHz input port (as shown by marker m19 of FIG. 4). The low pass section of the bandpass filter prevents energy from being transferred into the 760-870 MHz port (as shown by marker m18 of FIG. 4). The third trace 408 is provided which shows the bandpass filter response of the passive circuit 300 for the 760-870 MHz band. The passband of the filter is illustrated by markers m13 and m14 of FIG. 4. The bandpass filter provide harmonic rejection at the 2nd and higher order harmonic frequencies (no marker is shown in FIG. 4 to illustrate the harmonic rejection). The highpass section of this bandpass filter prevents energy from being transferred back into 380-520 MHz input port (as shown by marker m15 of FIG. 4) and 136-174 MHz input port. Embodiments of the present invention are not limited to the passive circuit design of FIG. 3.

Referring again to FIG. 2, the triplexer 222 provides harmonic filtering for each power amplifier 210, 212, 214. The triplexer 222 does not require switching to route signals from each of the input ports 290, 292, 294 to the common output port 296. As such, the triplexer 222 provides a multiband transceiver with certain advantages over various conventional transceivers. For example, if a conventional transceiver circuit implements complex switching circuits including PIN diodes and/or RF relays (instead of a triplexer), then it requires relatively complex software and/or hardware for controlling the switching circuits. Consequently, the conventional diode/relay based transceiver circuit is more expensive and hardware intensive as compared to the transceiver circuit 200 shown in FIG. 2.

Referring again to FIG. 2, the triplexer 222 is coupled to the directional coupler 226 via a diode 224. The diode 224 prevents current from flowing through the triplexer 222 in a undesirable direction (i.e., a direction opposite a transmit signal propagation direction) during a transmit and/or receive mode. The directional coupler 226 is configured to communicate a transmit signal to the antenna element 102 for transmission therefrom. In this regard, the directional coupler 226 has an input port 280 electrically connected to the common output port 296 of the multiplexer and a transmitted port 284 connected to an antenna port 286.

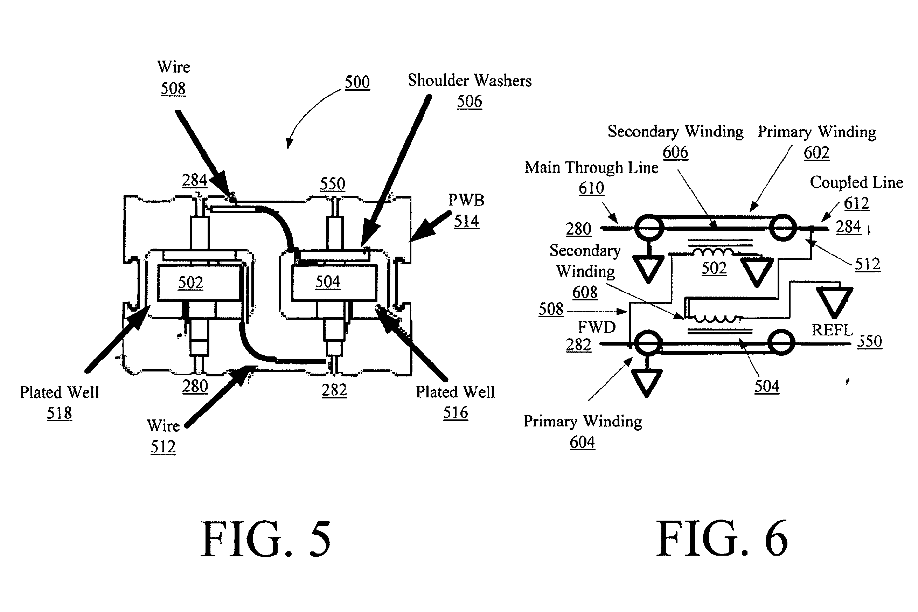

The directional coupler 226 is also configured to ensure that constant power will occur at the antenna port 286. In this regard, the directional coupler 226 provides a sample of RF power propagated in a particular direction (e.g., a transmit signal propagation direction) on a transmission line. This sample is provided at coupled port 282, and is used to provide a gain control signal. Gain control signal is communicated to a conversion circuit (not shown in FIG. 2). More particularly, the directional coupler 226 includes a coupled port 282 configured for coupling a portion of an RF signal to the conversion circuit (not shown). At the conversion circuit (not shown), the gain control signal is converted to a DC voltage signal. The DC voltage signal is then communication from the conversion circuit to each power amplifier 210, 212, 214. Accordingly, each power amplifier 210, 212, 214 has a gain control terminal for receiving the DC voltage signal (or feedback signal). Each of the power amplifiers 210, 212, 214 is responsive to the DC voltage signal (or feedback signal) for maintaining a controlled power output at the antenna port 286 over a range of frequencies defined by two or more frequency bands. The gain control signal can also be communicated from the directional coupler to a processing device (not shown) and/or controller (not shown) for protecting the transceiver from any impedance mismatch. An exemplary embodiment of the directional coupler 226 will be described in more detail below in relation to FIGS. 5-8.

As shown in FIG. 2, the transmit circuit 252 is a transmit circuit that supports analog communications in the 30-50 MHz VHF LO band. As such, the transmit circuit 252 is comprised of an attenuator 248, a variable attenuator 246, a pre-driver 244, a driver 242, a power amplifier 240, low pass filters 236, 238 and a directional coupler 232. The attenuators 248, 246 are generally configured to reduce the amplitude or power of an input signal without appreciably distorting its waveform. However, the variable attenuator 246 is driven by a control signal received from the directional coupler 232. The pre-driver 244, driver 242, power amplifier 240 provide a gain chain that increases the power of transmit signals from a low value to a high value. Each of the low pass filters 236, 238 passes low-frequency signals and attenuates (reduces the amplitude of) signals with frequencies higher than a cutoff frequency. The cutoff frequency of each low pass filter 236, 238 is selected in accordance with a particular transmit application.

Each low pass filter 236, 238 is coupled to the directional coupler 232 via a respective diode 262, 264. The diodes 262, 264 prevent current from flowing through the low pass filters 236, 238 in an undesirable direction during transmit and receive modes. The directional coupler 232 is configured to communicate a transmit signal to the antenna element 102 for transmission therefrom. The directional coupler 232 provides a sample of the transmitted RF signal to a detector circuit (not shown) to generate a gain control signal. The gain control signal is communicated to the variable attenuator 246, which has a control terminal for receiving the control signal. The control signal can be used to define an error voltage value to control variable attenuator 246 by comparing a sensed power value to a reference value. The directional coupler 232 is also configured to measure reflected power from the antenna element 102 to provide a measure of protection for the power amplifiers from impedance mismatch. An exemplary embodiment of the directional coupler 232 will be described in more detail below in relation to FIGS. 5-8.

It should be understood that the present invention is not limited to the embodiment shown in FIG. 2. For example, the transceiver 200 can be absent of switch 204 and the transmit circuit 252. Also, the transmit circuit 250 can be altered so as to support analog communications in one or more additional bands, such as the VHF LO band. In the VHF LO band scenario, the transmit circuit 250 would include an additional transmit sub-circuit in the RF power control loop 270 and a quadraplexer (instead of the triplexer 222).

Referring now to FIG. 5, there is provided a schematic illustration of an exemplary directional coupler 500 that is useful for understanding the present invention. A schematic illustration of an equivalent circuit for the directional coupler 500 is provided in FIG. 6. The directional couplers 226, 232 of FIG. 2 can be the same as or substantially similar to the directional coupler 500. As such, the following discussion is sufficient for understanding the directional couplers 226, 232 shown in FIG. 2.

The directional coupler 500 ensures that constant output power will occur at an antenna element (e.g., the antenna element 102 shown in FIGS. 1-2) as described above in relation to FIG. 2. In this regard, it should be understood that the directional coupler 500 is advantageously designed to provide a flat response across all frequency bands covered by a multiplexer (e.g., the multiplexer 222 shown in FIG. 2). As such, a power at an input port of an antenna element is substantially constant throughout each frequency band and between multiple frequency bands. The directional coupler 500 is also provided to facilitate the protection of a transceiver from any impedance mismatch as described above in relation to FIG. 2. The directional coupler 500 is frequency scaled to cover frequencies selected in accordance with a particular application. For example, the coupler 500 is frequency scaled to cover frequencies in the range of one hundred thirty six Mega Hertz to eight hundred seventy Mega Hertz (136-870 MHz) so as to accommodate P25 RF bands.

According to an aspect of the present invention, the directional coupler 500 is a multi octave surface mount directional coupler with improved coupling flatness, directivity and insertion loss. The improved coupling flatness facilitates a more accurate power control. The improved coupling flatness also allows for the reduction or elimination of power control look up tables. The improved directivity provides a directional coupler with a more accurate Voltage Standing Wave Ratio (VSWR) cutback characteristic. The improved insertion loss provides a transceiver with an improved efficiency that extends the battery life thereof and reduces thermal heating with the transceiver.

The directional coupler 500 can be packaged in a small Surface Mount Technology (SMT) package. The directional coupler 500 has a transformer isolating shield incorporated therein so as to improve performance thereof and minimize the amount of space it takes up on printed circuit boards. The transformer isolating shield will be described below. The directional coupler 500 overcomes certain drawbacks of conventional couplers. For example, the directional coupler 500 of the present invention is less sensitive to winding placement as compared to conventional couplers having an SMT design and lacking shields to isolate transformers. In this regard, it should be understood that the winding placement at higher frequencies can drastically limit performance because the windings from the transformers can couple to each other. Also, the directional coupler 500 of the present invention has an improved broadband performance as compared to conventional couplers.

As shown in FIGS. 5-6, the directional coupler 500 is implemented using a pair of coupled transformers 502, 504, a Printed Wiring Board (PWB) 514 and wires 508, 512. The PWB 514 includes two (2) plated wells 516, 518. Each plated well 516, 518 is cavity plated on its sidewalls and bottom surface with a particular finish. The finish can include, but is not limited to, an Electroless Nickel Immersion Gold (ENIG) finish and a Hot Air Solder Leveling (HASL) finish. Each plated well 516, 518 has a size and shape suitable for receiving a transformer 502, 504.

Each of the transformers 502, 504 is disposed within a respective one of the plated wells 516, 518. The plated wells 516, 518 provide shields for isolating the transformers 502, 504 from each other and/or reducing electric field coupling between the transformers 502, 504. In this regard, it should be noted that optimal shielding is achieved by placing the primary and secondary windings (not shown in FIG. 5) of the transformers 502, 504 in the plated wells 516, 518. The wires 508, 512 are used to space the primary and secondary windings (not shown) from the cores of the transformer 502, 504. The wires 508, 512 are also used to couple the transformers 502, 504 together. The wires 508, 512 can be, but are not limited to, wires having a TEFLON® insulation. The directional coupler 500 can further include a shield element or cover (not shown) placed on top of the transformers 502, 504 so as to enclose the transformers 502, 504 in the plated wells 516, 518.

As shown in FIG. 6, the directional coupler 500 includes four (4) ports 280, 282, 284 and 550. The ports 280, 282, 284 and 550 are designed to operate at an impedance (e.g., 50 Ohm impedance) selected in accordance with a particular application. The input of a main line 610 is through the input port 280, while the output of this main line 610 is through the transmitted port 284. The input of the coupled line 612 is through coupled port 284, while the output of this coupled line 612 is through isolated port 550. The primary winding 602 of the transformer 502 is connected in series with the main line 610, while the primary winding 604 of the transformer 504 is connected in series with the coupled line 612. The primary winding 602 is coupled to the secondary winding 606 of the transformer 502. The primary winding 604 is coupled to the secondary winding 608 of the transformer 504. The secondary winding 602 of the transformer 502 is connected at one end to ground and at the other end to coupled port 282. The secondary winding 608 of the transformer 504 is connected at one end to ground and at the other end to transmitted port 284.

In operation, a first signal propagated on the main line 610 at input port 280 is communicated to transmitted port 284. The first signal causes a second signal to be induced in the secondary winding 606 of the transformer 502. The second signal is communicated from the secondary winding 608 to coupled port 282, and therefore current for the second signal flows onto the coupled line 612. The current flow direction of the first signal in the primary winding 602 dictates the current flow direction of the second signal in the secondary winding 606. Therefore, current for the second signal will flow through the secondary winding 606 in a first direction when the first signal is placed on input port 280. In contrast, current for the second signal will flow through the secondary winding 606 in a second direction when the first signal is placed on transmitted port 284, where the second direction is opposite the first direction. A portion of the current for the first signal flows from transmitted port 284 through the secondary winding 608 of transformer 504 to ground. In effect, current for a third signal flows through the primary winding 604 of transformer 504 onto the coupled line 612. The second and third signals are set to be nearly equal to each other. As a result, the second and third signals will add together when current for the first signal flows through primary winding 602 in the first direction. The second and third signals will cancel each other when current for the first signal flows through primary winding 602 in the second direction. Consequently, a signal will be output at isolated port 550 only when current for the first signal flows through the main through line 610 in the first direction.

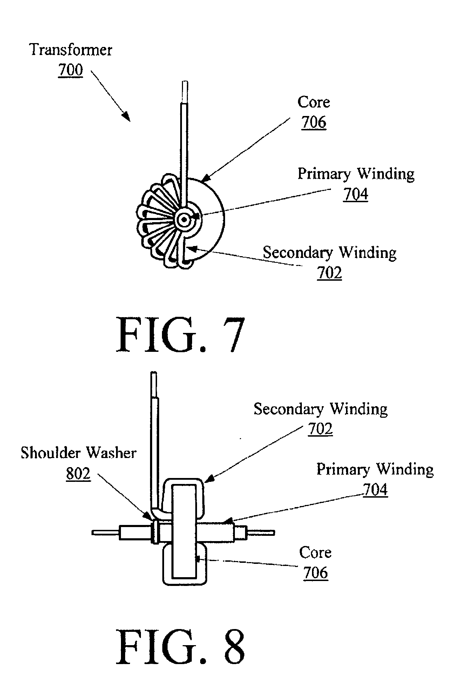

An exemplary embodiment of a transformer 700 will now be described in relation to FIGS. 7-10. The transformers 502, 504 of FIG. 5 can be the same as or substantially similar to the transformer 700. As such, the discussion of the transformer 700 is sufficient for understanding the transformers 502, 504.

Referring now to FIG. 7, there is provided a top view of the transformer 700. A side view of the transformer 700 is provided in FIG. 8. As shown in FIGS. 7-8, the transformer 700 is comprised of a toroidal core 706, a primary winding 704, and a secondary winding 702 with a shoulder washer 802 disposed thereon. The shoulder washer 802 is used to space the primary winding 704 from the toroidal core 706. The toroidal core 706 can be selected in accordance with a particular application. For example, the toroidal core 706 can be an RF toroidal core having a part No. T30-0 available from Micrometals, Inc. of Anaheim California. Embodiments of the present invention are not limited in this regard.

The primary winding 704 is wound at least one (1) turn around the toroidal core 706. The primary winding 704 is formed of a coaxial cable having a desired impedance (e.g., a 50 Ohm impedance). The primary winding 704 can be formed of a tin plated coaxial cable having a part number UT-070C-TP available from Micro-Coax, Inc. of Pottstown, Pennsylvania. Notably, the coaxial cable includes a center conductor and a shield. The center conductor is used to carry an RF signal. One side of the shield is coupled to ground to create a faraday shield around the center conductor. Embodiments of the present invention are not limited in this regard.

The secondary winding 702 is wound N turns around the toroidal core 706, where N is an integer (e.g., 11). The secondary winding 702 can be formed of any wire other than Bi-Filiar wire. For example, the secondary winding can be formed of a subminiature lead wire having a part number 28TDQ available from Phoenix Wire, Inc. Embodiments of the present invention are not limited in this regard.

### Method For Maintaining A Controlled Power Output At An Antenna Port

Referring now to FIG. 9, there is provided an exemplary method for maintaining a controlled power output at the antenna port over a range of frequencies defined by two or more frequency bands. As shown in FIG. 9, the method 900 begins at step 902 and continues with step 904. In step 904, an RF signal is propagated along any one of a plurality of parallel transmit paths of a multiband transceiver in a transmit propagation direction. The RF signal has a frequency falling within one of the following frequency bands 136-174 MHZ VHF Hi band, 380-520 MHz UHF band and 762-870 MHz band. In a subsequent step 906, the RF signal is routed from one of a plurality of multiplexer input ports (e.g., input ports 290, 292, and 294 of FIG. 2) to a common multiplexer output port (e.g., output port 296 of FIG. 2). Next, a harmonic distortion is reduced in the RF signal. The harmonic distortion can be reduced using a multiplexer (e.g., the triplexer 22 of FIG. 2). Thereafter, step 910 is performed where feedback signal is generated. The feedback signal is generated by coupling a portion of the RF signal from the common multiplexer output port to a common feedback loop (e.g., the RF power control loop 270 of FIG. 2) for a plurality of transmit sub-circuits (e.g., transmit circuits 210/216, 212/218 and 214/220 of FIG. 2). In a next step 912, the feedback signal is provided to at least one of the transmit sub-circuits. The feedback signal is used in step 914 to maintain a controlled power output at an antenna port (e.g., the antenna port 286 of FIG. 2) over a range of frequencies defined by the two or more frequency bands. Next, step 916 is performed where the method 900 returns to step 902 or subsequent processing is resumed.

Applicants present certain theoretical aspects above that are believed to be accurate that appear to explain observations made regarding embodiments of the invention. However, embodiments of the invention may be practiced without the theoretical aspects presented. Moreover, the theoretical aspects are presented with the understanding that Applicants do not seek to be bound by the theory presented.

While various embodiments of the present invention have been described above, it should be understood that they have been presented by way of example only, and not with limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

The word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is if, X employs A; X employs B; or X employs both A and B, then "X employs A or B" is satisfied under any of the foregoing instances.

## Claims

1. A multiband transceiver (200), comprising:
a plurality of transmit sub-circuits arranged in parallel and each configured to support communications in a respective one of a plurality of frequency bands;
a multiplexer (222) electrically arranged for receiving RF signals from each of the plurality of transmit sub-circuits at a plurality of multiplexer input ports (290, 292, 294), the multiplexer configured to route signals from each of the plurality of multiplexer input ports to a common multiplexer output port (296) and to reduce harmonic distortion induced by the plurality of transmit sub-circuits; and
a directional coupler (226; 500) having an input port (280) electrically connected to the common output port of the multiplexer, a transmit port (284) connected to an antenna, and a coupled port (282) configured for coupling a portion of the RF signal to a common feedback loop for the plurality of transmit sub-circuits, the common feedback loop providing a feedback signal coupled to each of the plurality of transmit sub-circuits;
wherein each of the plurality of transmit sub-circuits is responsive to the feedback signal for maintaining a controlled power output at the antenna port over a range of frequencies defined by the plurality of frequency bands,
**characterized in that** the transmit port is connected to the antenna exclusive of intervening switching circuitry.

2. The multiband transceiver according to claim 1, wherein the plurality of frequency bands include at least one of the following frequency bands a 30-50 MHz Very High Frequency Low band, a 136-174 MHz VHF High band, a 380-520 MHz Ultra High Frequency band, and a 762-870 MHz band.

3. The multiband transceiver according to claim 1, wherein each of the plurality of transmit sub-circuits includes at least one of a power amplifier (210, 212, 214) for increasing.a power of the RF signal and a low pass filter (216, 218, 220) for filtering the RF signal.

4. The multiband transceiver according to claim 3, wherein said power amplifier is responsive to the feedback signal for adjusting an amplitude of the RF signal so as to counteract an insertion loss resulting from the multiplexer.

5. The multiband transceiver according to claim 1, wherein the directional coupler includes a pair of transformers (502, 504; 700), each transformer of the pair of transformers includes a primary and secondary winding (602, 606).

6. The multiband transceiver according to claim 5, wherein the directional coupler further includes a printed wiring board (514) having plated wells (516, 518).

7. The multiband transceiver according to claim 6, wherein each transformer of the pair of transformers is disposed in a respective well of the plated wells so that at least one of the primary and secondary windings resides within the respective well.

8. The multiband transceiver according to claim 5, wherein at least one of the primary and secondary windings is spaced from a core of the transformer via at least one wire.

9. The multiband transceiver according to claim 5, wherein the primary and secondary windings are wound around a single toroidal core.

10. The multiband transceiver according to claim 9, wherein the primary winding is spaced from the toroidal core via a washer.

11. The multiband transceiver according to claim 5, wherein the primary winding is formed of a coaxial cable having a desired impedance and the secondary winding is formed of a subminiature lead wire.

## Patentansprüche

1. Mehrband-Sender/Empfänger (200) mit:
- einer Mehrzahl parallel angeordneter Sendeteilschaltungen, die jeweils dafür konfiguriert sind, die Kommunikation in einem jeweiligen einer Mehrzahl Frequenzbänder zu unterstützen,
- einem Multiplexer (222), der elektrisch angeschlossen ist, um an einer Mehrzahl Multiplexer-Eingangsanschlüsse (290, 292, 294) von jeder der Mehrzahl Sendeteilschaltungen HF-Signale zu empfangen, wobei der Multiplexer dafür konfiguriert ist, Signale von jedem der Mehrzahl Multiplexer-Eingangsanschlüsse an einen gemeinsamen Multiplexer-Ausgangsanschluss (296) weiterzuleiten und die durch die Mehrzahl Sendeteilschaltungen verursachte harmonische Verzerrung zu reduzieren, und
- einem Richtungskoppler (226; 500) mit einem Eingangsanschluss (280), der mit dem gemeinsamen Ausgangsanschluss des Multiplexers elektrisch verbunden ist, einem Sendeanschluss (284), der mit einer Antenne verbunden ist, und einem Koppelanschluss (282), der dafür konfiguriert ist, einen Teil des HF-Signals mit einer gemeinsamen Rückkopplungsschleife für die Mehrzahl Sendeteilschaltungen zu koppeln, wobei die gemeinsame Rückkopplungsschleife ein mit jeder der Mehrzahl Sendeteilschaltungen gekoppeltes Rückkopplungssignal bereitstellt,
- wobei jede der Mehrzahl Sendeteilschaltungen auf das Rückkopplungssignal anspricht, um über einen durch die Mehrzahl Frequenzbänder definierten Frequenzbereich am Antennenanschluss einen gesteuerten Leistungsausgang aufrechtzuerhalten,
- **dadurch gekennzeichnet, dass** der Sendeanschluss ohne zwischengeschaltete Schaltungsanordnung mit der Antenne verbunden ist.

2. Mehrband-Sender/Empfänger nach Anspruch 1, bei dem die Mehrzahl Frequenzbänder zumindest eines der folgenden Frequenzbänder umfasst: ein VHF-(Very High Frequency - sehr hohe Frequenz) Unterband von 30-50 MHz, ein VHF-Oberband von 136-174 MHz, ein UHF- (Ultrahochfrequenz-) Band von 380-520 MHz und ein Band von 762-870 MHz.

3. Mehrband-Sender/Empfänger nach Anspruch 1, bei dem jede der Mehrzahl Sendeteilschaltungen mindestens einen Leistungsverstärker (210, 212, 214) zum Erhöhen der Leistung des HF-Signals und ein Tiefpassfilter (216, 218, 220) zum Filtern des HF-Signals umfasst.

4. Mehrband-Sender/Empfänger nach Anspruch 3, bei dem der Leistungsverstärker zum Anpassen einer Amplitude des HF-Signals auf das Rückkopplungssignal anspricht, um einer auf den Multiplexer zurückzuführenden Einfügungsdämpfung entgegenzuwirken.

5. Mehrband-Sender/Empfänger nach Anspruch 1, bei dem der Richtungskoppler ein Paar Transformatoren (502, 504; 700) umfasst, wobei jeder Transformator des Paares Transformatoren eine Primär- und eine Sekundärwicklung (602, 606) umfasst.

6. Mehrband-Sender/Empfänger nach Anspruch 5, bei dem der Richtungskoppler ferner eine gedruckte Leiterplatte (514) mit metallisierten Vertiefungen (516, 518) aufweist.

7. Mehrband-Sender/Empfänger nach Anspruch 6, bei dem jeder Transformator des Paares Transformatoren in einer jeweiligen Vertiefung der metallisierten Vertiefungen angeordnet ist, so dass sich die Primär- und/oder Sekundärwicklung in der jeweiligen Vertiefung befindet.

8. Mehrband-Sender/Empfänger nach Anspruch 5, bei dem die Primär- und/oder Sekundärwicklung durch mindestens einen Draht unter Abstand von einem Kern des Transformators angeordnet ist.

9. Mehrband-Sender/Empfänger nach Anspruch 5, bei dem die Primär- und Sekundärwicklungen um einen einzelnen Toroidkern gewickelt sind.

10. Mehrband-Sender/Empfänger nach Anspruch 9, bei dem die Primärwicklung durch eine Unterlegscheibe unter Abstand von dem Toroidkern angeordnet ist.

11. Mehrband-Sender/Empfänger nach Anspruch 5, bei dem die Primärwicklung aus einem Koaxialkabel mit einer gewünschten Impedanz und die Sekundärwicklung aus einem Subminiatur-Hauptkabel gebildet ist.

## Revendications

1. Émetteur-récepteur multibande (200), comprenant :
une pluralité de sous-circuits d'émission agencés en parallèle et chacun configuré pour supporter des communications dans l'une respective parmi une pluralité de bandes de fréquences ;
un multiplexeur (222) électriquement agencé pour recevoir des signaux RF de chacun de la pluralité de sous-circuits d'émission au niveau d'une pluralité de ports d'entrée (290, 292, 294) de multiplexeur, le multiplexeur configuré pour acheminer des signaux de chacun de la pluralité de ports d'entrée de multiplexeur jusqu'à un port de sortie (296) commun de multiplexeur et pour réduire une distorsion harmonique induite par la pluralité de sous-circuits d'émission ; et
un coupleur directionnel (226 ; 500) ayant un port d'entrée (280) électriquement connecté au port de sortie commun du multiplexeur, un port d'émission (284) connecté à une antenne, et un port couplé (282) configuré pour coupler une partie du signal RF à une boucle de rétroaction commune pour la pluralité de sous-circuits d'émission, la boucle de rétroaction commune délivrant un signal de rétroaction couplé à chacun de la pluralité de sous-circuits d'émission ;
dans lequel chacun de la pluralité de sous-circuits d'émission réagit au signal de rétroaction pour maintenir une sortie de puissance commandée au niveau du port d'antenne sur une plage de fréquences définie par la pluralité de bandes de fréquences,
**caractérisé en ce que** le port d'émission est connecté à l'antenne à l'exclusion d'un ensemble intermédiaire de circuits de commutation.

2. Émetteur-récepteur multibande selon la revendication 1, dans lequel la pluralité de bandes de fréquences inclut au moins une parmi les bandes de fréquences suivantes : une bande basse très haute fréquence 30-50 MHz, une bande haute VHF 136-174 MHZ, une bande ultra haute fréquence 380-520 MHZ, et une bande 762-870 MHZ.

3. Émetteur-récepteur multibande selon la revendication 1, dans lequel chacun de la pluralité de sous-circuits d'émission inclut au moins un parmi un amplificateur de puissance (210, 212, 214) pour augmenter une puissance du signal RF et un filtre passe-bas (216, 218, 220) pour filtrer le signal RF.

4. Émetteur-récepteur multibande selon la revendication 3, dans lequel ledit amplificateur de puissance réagit au signal de rétroaction pour ajuster une amplitude du signal RF de façon à compenser un affaiblissement d'insertion résultant du multiplexeur.

5. Émetteur-récepteur multibande selon la revendication 1, dans lequel le coupleur directionnel inclut une paire de transformateurs (502, 504 ; 700), chaque transformateur de la paire de transformateurs inclut des enroulements primaire et secondaire (602, 606).

6. Émetteur-récepteur multibande selon la revendication 5, dans lequel le coupleur directionnel inclut en outre une carte de câblage imprimé (514) ayant des puits plaqués (516, 518).

7. Émetteur-récepteur multibande selon la revendication 6, dans lequel chaque transformateur de la paire de transformateurs est disposé dans un puits respectif parmi les puits plaqués de façon à ce qu'au moins un des enroulements primaire et secondaire réside à l'intérieur du puits respectif.

8. Émetteur-récepteur multibande selon la revendication 5, dans lequel au moins un des enroulements primaire et secondaire est espacé d'un noyau du transformateur par l'intermédiaire d'au moins un fil.

9. Émetteur-récepteur multibande selon la revendication 5, dans lequel les enroulements primaire et secondaire sont enroulés autour d'un noyau toroïdal unique.

10. Émetteur-récepteur multibande selon la revendication 9, dans lequel l'enroulement primaire est espacé du noyau toroïdal par l'intermédiaire d'une rondelle.

11. Émetteur-récepteur multibande selon la revendication 5, dans lequel l'enroulement primaire est formé d'un câble coaxial ayant une impédance désirée et l'enroulement secondaire est formé d'un fil conducteur ultra-miniaturisé.
